(19) Europäisches Patentamt
European Patent Office
Office européen des brevets

(11) EP 1 068 275 B1

(12) EUROPEAN PATENT SPECIFICATION

(45) Date of publication and mention of the grant of the patent:
**09.04.2003 Bulletin 2003/15**

(21) Application number: **99902427.6**

(22) Date of filing: **21.01.1999**

(51) Int Cl.$^7$: **C09J 7/02**

(86) International application number:
**PCT/US99/01364**

(87) International publication number:
**WO 99/046348 (16.09.1999 Gazette 1999/37)**

(54) **DEFORMABLE PRESSURE SENSITIVE ADHESIVE TAPE**

VERFORMBARES DRUCKEMPFINDLICHES KLEBEBAND

RUBAN AUTO-ADHESIF DEFORMABLE

(84) Designated Contracting States:
**AT BE CH DE DK ES FI FR GB GR IE IT LI LU MC NL PT SE**

(30) Priority: **11.03.1998 US 77664 P**

(43) Date of publication of application:
**17.01.2001 Bulletin 2001/03**

(73) Proprietor: **THE DOW CHEMICAL COMPANY**
**Midland, Michigan 48674 (US)**

(72) Inventor: **VAN VOLKENBURGH, William, R.**
**Lake Jackson, TX 77566 (US)**

(74) Representative:
**Böhm, Brigitte, Dipl.-Chem. Dr. et al**
**Weickmann & Weickmann**
**Patentanwälte**
**Postfach 86 08 20**
**81635 München (DE)**

(56) References cited:
**WO-A-93/06183** **US-A- 5 739 200**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

Printed by Jouve, 75001 PARIS (FR)

EP 1 068 275 B1

## Description

This invention relates to pressure sensitive products (PSP's) comprising polymer resin and polymer resin blends generally, and more specifically but without limitation to resin and resin blends useful for making film capable of being made into pressure sensitive products for use in applications such as labels, decals and adhesive tapes. This invention relates to tapes and labels generally, and more specifically but without limitation to deformable, pressure-sensitive tapes and labels and to filmstock for making such tape and labels. The various applications in which the pressure sensitive products of the present invention can be used, include, but are not limited to, prime labels, electronic data processing (EDP) labels, industrial roll labels and deformable pressure-sensitive labels. The various tape applications in which the pressure sensitive products of the present invention can be used, include, but are not limited to, electrical tapes, automotive assembly tapes, bandages, masking tape, office tape, duct tape, pipewrap and box seal tapes. There are also a variety of miscellaneous other applications for the pressure sensitive products of the present invention which include, but are not limited to, graphic arts materials, sun control films, masking sheets, and floor tiles.

Pressure sensitive products typically involve the combination of a film (henceforth known as the "filmstock") with a pressure sensitive adhesive for adhering the filmstock to a selected substrate, such as a bottle to be labeled. The use of deformable thermoplastic filmstock for such label PSP's is preferable in many respects to the use of paper products. Deformable thermoplastic labels desirably are resistant to moisture, tearing, cracking, creasing, wrinkling, shrinking, etc. These properties are especially important when the products are applied to soft, squeezable or otherwise deformable substrates.

For making labels, tapes, or graphic art PSP's, the filmstock is generally used in conjunction with a pressure sensitive adhesive layer for adhering the filmstock to a selected substrate. The pressure sensitive adhesive is generally selected so that when the filmstock adheres to the substrate, the strength of the filmstock-adhesive interface, the strength of the substrate-adhesive interface, and the cohesive strength of the adhesive itself are all greater than the forces required for deformation and recovery of the filmstock. The amount of pressure sensitive adhesive should be sufficient to enable the PSP to accomplish its intended purpose for the reasonable lifetime of a deformable substrate.

For making labels and graphic art materials, the filmstock and pressure sensitive adhesive combination is also generally used in conjunction with a release liner. In a typical production line, the filmstock/adhesive/release liner combination is passed down a line which is equipped with a rotary die which cuts through the filmstock but not the release liner. As this line is merged with a line of the substrate (for example a line of flexible or deformable bottles to be labeled) the label and adhesive is suitably peeled away from or dispensed from the liner and adhered to the flexible or deformable substrate. The release liner may be any suitable conventionally known liner material for labeling applications.

In terms of die-cuttability, a film/adhesive/release liner composite desirably should be die-cuttable on a rotary die at commercial manufacturing speeds without web breaks and such that only the filmstock layer is cut without cutting the release liner. When a film is not very die-cuttable, then more sophisticated and expensive release liners must be used. For tapes, the film substrate should provide sufficient toughness and strength to perform but should be easy to cut or tear during application.

In order to be successfully used as filmstock for deformable, pressure-sensitive labels, in addition to die-cuttability, a film should also meet two additional general requirements, namely good optics, and appropriate stiffness. The optical properties required for a filmstock are application dependent. In some cases, a low haze high gloss film is required. In other cases, a higher haze, lower gloss film is required.

In terms of stiffness, a filmstock must be sufficiently stiff to dispense easily, but not too stiff that it wrinkles or deforms when applied to a deformable substrate.

Polystyrene-based filmstocks are generally sufficiently die-cuttable and stiff. The stiffness of these polystyrene-based filmstocks allows for good machine processability in application equipment, but limits their utility on deformable substrates because PSP products made from these polystyrene-based filmstocks wrinkle when applied to a deformable substrate. In addition, such polystyrene-based filmstocks often exhibit poor optical qualities. For example, U.S. Patent No. 5,151,309 issued to Dollinger ("Dollinger") discloses a label filmstock comprising a polystyrene blend. The label filmstock of Dollinger is die-cuttable and has good stiffness. However, the label filmstock of Dollinger has very high haze due to the polystyrene blend component. This high haze precludes the use of Dollinger label filmstock in clear labels.

Polyethylene label filmstocks, such as disclosed in Re. 32,929 issued to Ewing ("Ewing"), can be formulated to meet a range of optical and stiffness requirements, but are difficult to die-cut and to dispense from a release liner in labeling equipment because of their elongation and yield characteristics. Fillers may be added to polyethylene label filmstocks to control die-cuttability, but the addition of fillers limits the optical properties possible. Highly oriented polyethylene label filmstocks have improved die-cuttability but have deficiencies due to the optical properties obtainable as well as excessive stiffness. A filmstock having excessive stiffness is generally unable to be successfully utilized in a deformable PSP (that is, a PSP to be adhered to a deformable substrate).

Hence there remains a requirement for a PSP having the correct combination of optical properties, die-cuttability, and the appropriate stiffness.

The present invention pertains to a deformable pressure sensitive product (PSP) having an ultimate elongation of less than or equal to 350 and greater than or equal to 20 percent and a 1 percent secant modulus in the machine direction of from 5,000 to 200,000, comprising:

(I) a filmstock comprising

(A) from 25 to 100 percent by weight based on the combined weight of (A) and (B) of a substantially random interpolymer having a molecular weight distribution ($M_w/M_n$) of from 1.5 to 20, and a melt index ($I_2$) of from 0.2 to 10, and comprising

(1) from 21 to 65 mole percent of polymer units derived from

(a) at least one vinyl or vinylidene aromatic monomer, or
(b) at least one hindered aliphatic or cycloaliphatic vinyl or vinylidene monomer, or
(c) a combination of at least one vinyl or vinylidene aromatic monomer and at least one hindered aliphatic or cycloaliphatic vinyl or vinylidene monomer; and

(2) from 35 to 79 mole percent of polymer units derived from ethylene or at least one aliphatic $\alpha$-olefin having from 3 to 20 carbon atoms or combination thereof;

(B) from 0 to 75 weight percent based on the combined weight of (A) and (B) of a glassy polymer;

(II) a pressure sensitive adhesive layer; and optionally

(III) a release liner.

Any reference herein to metals of a particular group refers to the "new" groups of the periodic table of the elements set forth in the CRC Handbook of Chemistry and Physics, 71st ed.

Any numerical values recited herein include all values from the lower value to the upper value in increments of one unit provided that there is a separation of at least 2 units between any lower value and any higher value. As an example, if it is stated that the amount of a component or a value of a process variable such as, for example, temperature, pressure, and time is, for example, from 1 to 90, preferably from 20 to 80, more preferably from 30 to 70, it is intended that values such as 15 to 85, 22 to 68, 43 to 51, 30 to 32 etc. are expressly enumerated in this specification. For values which are less than one, one unit is considered to be 0.0001, 0.001, 0.01 or 0.1 as appropriate. These are only examples of what is specifically intended and all possible combinations of numerical values between the lowest value and the highest value enumerated are to be considered to be expressly stated in this application in a similar manner.

The term "hydrocarbyl" means any aliphatic, cycloaliphatic, aromatic, aryl substituted aliphatic, aryl substituted cycloaliphatic, aliphatic substituted aromatic, or cycloaliphatic substituted aromatic groups. The aliphatic or cycloaliphatic groups are preferably saturated. Likewise, the term "hydrocarbyloxy" means a hydrocarbyl group having an oxygen linkage between it and the carbon atom to which it is attached.

The term "interpolymer" is used herein to indicate a polymer wherein at least two different monomers are polymerized to form the interpolymer. This includes copolymers, terpolymers, etc.

The term "mer(s)" means the polymerized unit of the polymer derived from the indicated monomer(s).

The term "plurality" as used herein means two or more.

When references are made herein to a polymer containing monomer(s) or monomer units derive from, it really means that the polymer contains monomer(s) residues resulting from polymerizing the indicated monomer(s) to make the polymer.

The term "pressure sensitive product" as used herein means the combination of a filmstock, a pressure sensitive adhesive, and optionally, a release layer which are found in applications such as labels, decals, tape.

The term "filmstock" as used herein means the deformable thermoplastic film layer in a pressure sensitive product which, in the case of a label, is transferred ultimately to the substrate or, in the case of an adhesive tape, provides the main body of the tape and the layer to which the tape adhesive is coated. Filmstock can be produced from monolayer or multilayer films, coextruded or laminated.

The term "pressure sensitive adhesive" as used herein describes the adhesive layer on a filmstock and which causes the filmstock to adhere to the substrate in a pressure sensitive product. Such pressure sensitive adhesive

materials are aggressively and permanently tacky at room temperature at the time of application, and firmly adhere to a variety of dissimilar surfaces with the application of light pressure, such as pressing with a finger. Despite their aggressive tackiness, pressure sensitive adhesives may be removed from smooth surfaces without leaving significant residue.

The term "release layer" as used herein describes the layer to which in many labeling processes, the feedstock and adhesive is suitably peeled away from or dispensed from prior to adhesion to the flexible or deformable substrate. The release liner may be any suitable conventionally known liner material for labeling applications.

The term "substantially random" in the substantially random interpolymer comprising ethylene or an α-olefin, or combination thereof and a vinyl or vinylidene aromatic monomer or hindered aliphatic vinyl or vinylidene monomer as used herein means that the distribution of the monomers of said interpolymer can be described by the Bernoulli statistical model or by a first or second order Markovian statistical model, as described by J. C. Randall in POLYMER SEQUENCE DETERMINATION, Carbon 13 NMR Method, Academic Press New York, 1977, pp. 71-78. Preferably, the substantially random interpolymer does not contain more than 15 percent of the total amount of vinyl or vinylidene aromatic monomer in blocks of vinyl or vinylidene aromatic monomer of more than 3 units. More preferably, the interpolymer was not characterized by a high degree of either isotacticity or syndiotacticity. This means that in the 13C-NMR spectrum of the substantially random interpolymer the peak areas corresponding to the main chain methylene and methine carbons representing either meso diad sequences or racemic diad sequences should not exceed 75 percent of the total peak area of the main chain methylene and methine carbons.

1) The Filmstock Component of the Pressure Sensitive Produces of the Present Invention

a) The Substantially Random Interpolymers

The interpolymers suitable for use in the filmstock of the present invention are substantially random interpolymers prepared by polymerizing ethylene and /or one or more α-olefin monomers with one or more vinyl or vinylidene aromatic monomers or one or more hindered aliphatic or cycloaliphatic vinyl or vinylidene monomers or a combination thereof, and optionally with other polymerizable ethylenically unsaturated monomer(s).

Suitable α-olefin monomers include for example, α-olefin monomers containing from 3 to 20, preferably from 3 to 12, more preferably from 3 to 8 carbon atoms. Preferred such monomers include propylene, butene-1, 4-methyl-1-pentene, hexene-1 and octene-1. Most preferred are ethylene or one or more with $C_{3-8}$ α-olefins or a combination thereof. These α-olefins do not contain an aromatic moiety.

Suitable vinyl or vinylidene aromatic monomers which can be employed to prepare the interpolymers employed in the blends include, for example, those represented by the following formula:

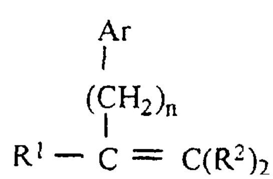

wherein $R^1$ is selected from the group of radicals consisting of hydrogen and alkyl radicals containing from 1 to 4 carbon atoms, preferably hydrogen or methyl; each $R^2$ is independently selected from the group of radicals consisting of hydrogen and alkyl radicals containing from 1 to 4 carbon atoms, preferably hydrogen or methyl; Ar is a phenyl group or a phenyl group substituted with from 1 to 5 substituents selected from the group consisting of halo, $C_{1-4}$-alkyl, and $C_{1-4}$-haloalkyl; and n has a value from zero to 4, preferably from zero to 2, most preferably zero. Exemplary vinyl or vinylidene aromatic monomers include styrene, vinyl toluene, α-methylstyrene, t-butyl styrene, chlorostyrene, including all isomers of these compounds. . Particularly suitable such monomers include styrene and lower alkyl- or halogen-substituted derivatives thereof. Preferred monomers include styrene, α-methyl styrene, the lower alkyl- ($C_1$ - $C_4$) or phenyl-ring substituted derivatives of styrene, such as for example, ortho-, meta-, and para-methylstyrene, the ring halogenated styrenes, para-vinyl toluene or mixtures thereof. A more preferred aromatic vinyl monomer is styrene.

By the term "hindered aliphatic or cycloaliphatic vinyl or vinylidene compounds", it is meant addition polymerizable vinyl or vinylidene monomers corresponding to the formula:

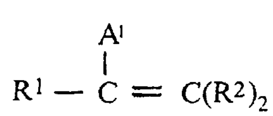

wherein $A^1$ is a sterically bulky, aliphatic or cycloaliphatic substituent of up to 20 carbons, $R^1$ is selected from the group of radicals consisting of hydrogen and alkyl radicals containing from 1 to 4 carbon atoms, preferably hydrogen or methyl; each $R^2$ is independently selected from the group of radicals consisting of hydrogen and alkyl radicals containing from 1 to 4 carbon atoms, preferably hydrogen or methyl; or alternatively $R^1$ and $A^1$ together form a ring system. By the term "sterically bulky" is meant that the monomer bearing this substituent is normally incapable of addition polymerization by standard Ziegler-Natta polymerization catalysts at a rate comparable with ethylene polymerizations. $\alpha$-olefin monomers containing from 2 to 20 carbon atoms and having a linear aliphatic structure such as propylene, butene-1, hexene-1 and occene-1 are not considered as hindered aliphatic monomers. Preferred hindered aliphatic or cycloaliphatic vinyl or vinylidene compounds are monomers in which one of the carbon atoms bearing ethylenic unsaturation is tertiary or quaternary substituted. Examples of such substituents include cyclic aliphatic groups such as cyclohexyl, cyclohexenyl, cyclooctenyl, or ring alkyl or aryl substituted derivatives thereof, tert-butyl, and norbornyl. Most preferred hindered aliphatic or cycloaliphatic vinyl or vinylidene compounds are the various isomeric vinyl - ring substituted derivatives of cyclohexene and substituted cyclohexenes, and 5-ethylidene-2-norbornene. Especially suitable are 1-, 3-, and 4-vinyl-cyclohexene.

Other optional polymerizable ethylenically unsaturated monomer(s) include strained ring olefins such as norbornene and $C_{1-10}$ alkyl or $C_{6-10}$ aryl substituted norbornenes, with an exemplary interpolymer being ethylene/styrene/norbornene.

Polymerizations and unreacted monomer removal at temperatures above the autopolymerization temperature of the respective monomers may result in formation of some amounts of homopolymer polymerization products resulting from free radical polymerization. For example, while preparing the substantially random interpolymer, an amount of atactic vinyl or vinylidene aromatic homopolymer may be formed due to homopolymerization of the vinyl or vinylidene aromatic monomer at elevated temperatures. The presence of vinyl or vinylidene aromatic homopolymer, in general, is not detrimental for the purposes of the present invention and can be tolerated. The vinyl or vinylidene aromatic homopolymer may be separated from the interpolymer, if desired, by extraction techniques such as selective precipitation from solution with a non solvent for either the interpolymer or the vinyl or vinylidene aromatic homopolymer. For the purpose of the present invention it is preferred that no more than 30 weight percent, preferably less than 20 weight percent based on the total weight of the interpolymers of vinyl or vinylidene aromatic homopolymer is present.

The substantially random interpolymers may also be modified by various cross-linking processes including, but not limited to peroxide-, silane-, sulfur-, radiation-, or azide-based cure systems. A full description of the various cross-linking technologies is described in allowed U.S. Patent Application No. 08/921,641 and copending U.S. Patent Applicaton No. 08/921,642 both filed on August 27, 1997.

Dual cure systems, which use a combination of heat, moisture cure, and radiation steps, may be effectively employed. For instance, it may be desirable to employ peroxide crosslinking agents in conjunction with silane crosslinking agents, peroxide crosslinking agents in conjunction with radiation, sulfur-containing crosslinking agents in conjunction with silane crosslinking agents, etc.

The substantially random interpolymers may also be modified by various cross-linking processes including, but not limited to the incorporation of a diene component as a termonomer in its preparation and subsequent cross linking by the aforementioned methods and further methods including vulcanization via the vinyl group using sulfur for example as the cross linking agent.

One method of preparation of the substantially random interpolymers includes polymerizing a mixture of polymerizable monomers in the presence of one or more metallocene or constrained geometry catalysts in combination with various cocatalysts, as described in EP-A-0,416,815 by James C. Stevens *et al.* and U. S. Patent No. 5,703,187 by Francis J. Timmers. Preferred operating conditions for such polymerization reactions are pressures from atmospheric up to 3000 atmospheres and temperatures from -30°C to 200°C. Polymerizations and unreacted monomer removal at temperatures above the autopolymerization temperature of the respective monomers may result in formation of some amounts of homopolymer polymerization products resulting from free radical polymerization.

Examples of suitable catalysts and methods for preparing the substantially random interpolymers are disclosed in U. S. Patent Application Serial No. 702,475, filed May 20, 1991 (EP-A-514,828); as well as U. S. Patent Nos.: 5,055,438; 5,057,475; 5,096,867; 5,064,802; 5,132,380; 5,189,192; 5,321,106; 5,347,024; 5,350,723; 5,374,696; 5,399,635; 5,470,993; 5,703,187; and 5,721,185.

The substantially interpolymers can also be prepared by the methods described in JP 07/278230 employing compounds shown by the general formula

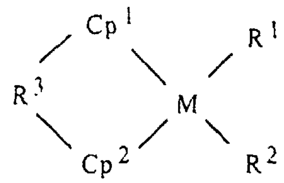

where Cp' and $Cp^2$ are cyclopentadienyl groups, indenyl groups, fluorenyl groups, or substituents of these, independently of each other; $R^1$ and $R^2$ are hydrogen atoms, halogen atoms, hydrocarbon groups with carbon numbers of 1-12, alkoxyl groups, or aryloxyl groups, independently of each other; M is a group IV metal, preferably Zr or Hf, most preferably Zr; and $R^3$ is an alkylene group or silanediyl group used to cross-link $Cp^1$ and $Cp^2$).

The substantially random interpolymers can also be prepared by the methods described by John G. Bradfute et al. (W. R. Grace & Co.) in WO 95/32095; by R. B. Pannell (Exxon Chemical Patents, Inc.) in WO 94/00500; and in <u>Plastics Technology</u>, p. 25 (September 1992).

Also suitable are the substantially random interpolymers which comprise at least one α-olefin/vinyl aromatic/vinyl aromatic/α-olefin tetrad disclosed in WO 98/09999, by Francis J. Timmers *et al.*. These interpolymers contain additional signals in their carbon-13 NMR spectra with intensities greater than three times the peak to peak noise. These signals appear in the chemical shift range 43.70-44.25 ppm and 38.0-38.5 ppm. Specifically, major peaks are observed at 44.1, 43.9 and 38.2 ppm. A proton test NMR experiment indicates that the signals in the chemical shift region 43.70-44.25 ppm are methine carbons and the signals in the region 38.0-38.5 ppm are methylene carbons.

It is believed that these new signals are due to sequences involving two head-to-tail vinyl aromatic monomer insertions preceded and followed by at least one α-olefin insertion, for example an ethylene/styrene/styrene/ ethylene tetrad wherein the styrene monomer insertions of said tetrads occur exclusively in a 1,2 (head to tail) manner. It is understood by one skilled in the art that for such tetrads involving a vinyl aromatic monomer other than styrene and an α-olefin other than ethylene that the ethylene/vinyl aromatic monomer/vinyl aromatic monomer/ethylene tetrad will give rise to similar carbon-13 NMR peaks but with slightly different chemical shifts.

These interpolymers are prepared by conducting the polymerization at temperatures of from -30°C to 250°C in the presence of such catalysts as those represented by the formula

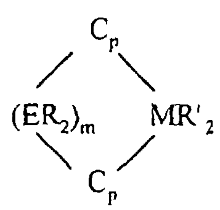

wherein: each Cp is independently, each occurrence, a substituted cyclopentadienyl group π-bound to M; E is C or Si; M is a group IV metal, preferably Zr or Hf, most preferably Zr; each R is independently, each occurrence, H, hydrocarbyl, silahydrocarbyl, or hydrocarbylsilyl, containing up to 30 preferably from 1 to 20 more preferably from 1 to 10 carbon or silicon atoms; each R' is independently, each occurrence, H, halo, hydrocarbyl, hyrocarbyloxy, silahydrocarbyl, hydrocarbylsilyl containing up to 30 preferably from 1 to 20 more preferably from 1 to 10 carbon or silicon atoms or two R' groups together can be a $C_{1-10}$ hydrocarbyl substituted 1,3-butadiene; m is 1 or 2; and optionally, but preferably in the presence of an activating cocatalyst. Particularly, suitable substituted cyclopentadienyl groups include those illustrated by the formula:

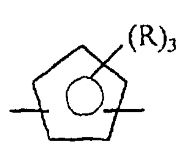

wherein each R is independently, each occurrence, H, hydrocarbyl, silahydrocarbyl, or hydrocarbylsilyl, containing up to 30 preferably from 1 to 20 more preferably from 1 to 10 carbon or silicon atoms or two R groups together form a divalent derivative of such group. Preferably, R independently each occurrence is (including where appropriate all isomers) hydrogen, methyl, ethyl, propyl, butyl, pentyl, hexyl, benzyl, phenyl or silyl or (where appropriate) two such

R groups are linked together forming a fused ring system such as indenyl, fluorenyl, tetrahydroindenyl, tetrahydrofluorenyl, or octahydrofluorenyl.

Particularly preferred catalysts include, for example, racemic-(dimethylsilanediyl)-bis-(2-methyl-4-phenylindenyl)zirconium dichloride, racemic-(dimethylsilanediyl)-bis-(2-methyl-4-phenylindenyl) zirconium 1,4-diphenyl-1,3-butadiene, racemic-(dimethylsilanediyl)-bis-(2-methyl-4-phenylindenyl)zirconium di-$C_{1-4}$ alkyl, racemic-(dimethylsilanediyl)-bis-(2-methyl-4-phenylindenyl)zirconium di-$C_{1-4}$ alkoxide, or any combination thereof.

Also included are the titanium-based constrained geometry catalysts, [N-(1,1-dimethylethyl)-1,1-dimethyl-1-[(1,2,3,4,5-η)-1,5,6,7-tetrahydro-s-indacen-1-yl]silanaminato(2-)-N]titanium dimethyl; (1-indenyl) (tert-butylamido) dimethyl- silane titanium dimethyl; ((3-tert-butyl) (1,2,3,4,5-η)-1-indenyl) (tert-butylamido) dimethylsilane titanium dimethyl; and ((3-iso-propyl)(1,2,3,4,5-η)-1-indenyl)(tert-butyl amido)dimethylsilane titanium dimethyl.

Further preparative methods for the interpolymer have been described in the literature. Longo and Grassi (*Nakromol. Chem.,* 191:2387-2396, 1990), and D'Anniello *et al.* (*Journal of Applied Polymer Science,* 58:1701-1706, 1995) reported the use of a catalytic system based on methylalumoxane (MAO) and cyclopentadienyltitanium trichloride ($CpTiCl_3$) to prepare an ethylene-styrene copolymer. Xu and Lin (Polymer Preprints, Am. Chem. Soc., Div. Polym. Chem.), Vol. 35, pp. 686,687, 1994, have reported copolymerization using a $MgCl_2/TiCl_4/NdCl_3/Al(iBu)_3$ catalyst to give random copolymers of styrene and propylene. Lu et *al*. *(Journal of Applied Polymer Science,* 53:1453-1460, 1994, have described the copolymerization of ethylene and styrene using a $TiCl_4/NdCl_3/$ $MgCl_2/Al(Et)_3$ catalyst. The manufacture of α-olefin/vinyl aromatic monomer interpolymers such as propylene/styrene and butene/styrene are described in U. S. Patent No. 5,244,996, issued to Mitsui Petrochemical Industries Ltd or United States patent number 5,652,315 also issued to Mitsui Petrochemical Industries Ltd or as disclosed in DE 197 11 339 A1 to Denki Kagaku Kogyo KK. The random copolymers of ethylene and styrene as disclosed in Polymer Preprints Vol 39, No. 1, March 1998 by Toru Aria et al. may also be employed as starting materials for the functionalized interpolymers of the present invention..

The interpolymers which contain polymer units derived from hindered cycloaliphatic monomer are usually prepared by subjecting an interpolymer containing monovinylidene aromatic monomer residues to hydrogenation thereof converting some or all of the aromatic rings to cycloaliphatic rings which can be saturated (for example, cyclohexane ring) or unsaturated (cyclohexene ring).

b) Blend Compositions Comprising the Substantially Random Interpolymers

The predominant component in polymer blends useful in producing the filmstock used in the present invention is one or more substantially random interpolymers. The second component of the blend is a glassy polymer.

The glassy polymers include, but are not limited to, homopolymers of a single vinyl or vinylidene aromatic monomer or interpolymers prepared from one or more vinyl or vinylidene aromatic monomers. Particularly suitable are the vinyl aromatic monomers.

Suitable vinyl aromatic polymers for use in the present invention include homopolymers or interpolymers of one or more vinyl aromatic monomers, or an interpolymer of one or more vinyl aromatic monomers and one or more monomers interpolymerizable therewith other than an aliphatic α-olefin. Suitable vinyl aromatic monomers are represented by the following formula:

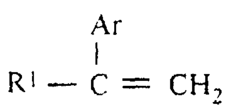

wherein $R^1$ is selected from the group of radicals consisting of hydrogen and alkyl radicals containing three carbons or less, and Ar is a phenyl group or a phenyl group substituted with from 1 to 5 substituents selected from the group consisting of halo, $C_{1-4}$-alkyl, and $C_{1-4}$-haloalkyl. Exemplary vinyle aromatic monomers include styrene, para-vinyl toluene, α-methylstyrene, t-butyl styrene, chlorostyrene, including all isomers of these compounds, etc. Styrene is a particularly desirable vinyl aromatic monomer for the vinyl aromatic polymers used in the practice of the present invention. Suitable copolymers are the acrylonitrile-butadiene-styrene (ABS) polymers, styrene-acrylonitrile (SAN), and rubber modified styrenics including high impact polystyrene,

Examples of suitable interpolymerizable comonomers other than a vinylaromatic monomer include, for example, $C_4$-$C_6$ conjugted dienes, especially butadiene or isoprene, N-phenyl maleimide, acrylamide, ethylenically-unsaturated nitrile monomers such as acrylonitrile and methacrylonitrile, ethylenically-unsaturated mono- and difunctional carboxylic acids and derivatives thereof such as esters and, in the case of difunctional acids, anhydrides, such as acrylic acid, $C_{1-4}$-alkylacrylates or methacrylates, such as n-butyl acrylate and methyl methacrylate, maleic anhydride, etc.

Most acrylic resins derive from the peroxide-catalyzed free radical polymerization of methyl methacrylate

(MMA) to make polymethylmethacrylate (PMMA). As described by H. Luke in Modern Plastics Encyclopedia, 1989, pp. 20-21, MMA is usually copolymerized with other acrylates such as methyl- or ethyl acrylate using four basic polymerization processes, bulk, suspension, emulsion and solution. Acrylics can also be modified with various ingredients including styrene, butadiene, vinyl and alkyl acrylates. Acrylics known as PMMA have ASTM grades and specifications. Grades 5, 6 and 8 vary mainly in deflection temperature under load (DTL) requirements. Grade 8 requires a tensile strength of 9,000 psi vs 8,000 psi for Grades 5 and 6. The DTL varies from a minimum requirement of 153°F to a maximum of 189°F, under a load of 264 p.s.i. Certain grades have a DTL of 212°F. Impact-modified grades range from an Izod impact of 1.1 to 2.0 ft .lb/in for non-weatherable transparent materials. The opaque impact-modified grades can have Izod impact values as high as 5.0 it .lb/in.

The addition of acrylic resin such as PMMA to the filmstock of the present invention can result in an increase in modulus and heat resistance of the filmstock and a reduction in the tendency of the film to block.

In some cases it is also desirable to copolymerize a cross-linking monomer such as a divinyl benzene into the vinyl aromatic polymer.

Of these the most preferred glassy polymers are polystyrene, PMMA, and SAN.

Filmstock of the present invention may be a monolayer or a multilayer film. Preferably, the filmstock of the present invention is a monolayer film. In any case, at least one layer (or the only layer in a monolayer film) of the present invention comprises a substantially random interpolymer or blend composition as described herein. These polymers and polymer blends can be used to produce either monolayer or multilayer filmstock using techniques well known in the art. Preferably, label filmstock of the present invention is a monolayer film. However, the present invention also contemplates a multilayer label filmstock comprising at least one layer having the same composition as would a monolayer label filmstock of the present invention. The other layers can suitably comprise polystyrene, polyethylene, polypropylene, ethylene/vinyl acetate copolymer.

The filmstock of the present invention optionally may contain other materials in addition to the substantially random interpolymer, so long as these other materials in the amounts contemplated do not unduly interfere with achieving the desired combination of optics, stiffness, and die-cuttability. Additives such as antioxidants (for example, hindered phenols such as, for example, Irganox® 1010 a registered trademark of Ciba Geigy), phosphites (for example, Irgafos® 168 a registered trademark of Ciba Geigy),), u.v. stabilizers, cling additives (for example, polyisobutylene), slip agents (such as erucamide stearamide), antiblock additives, colorants, pigments, such as titanium dioxide, can also be included in the incerpolymers blends employed in the present invention. Processing aids, which are also referred to herein as plasticizers, are optionally provided to reduce the viscosity of a composition, and include the phthalates, such as dioctyl phthalate and diisobutyl phthalate, natural oils such as lanolin, and paraffin, naphthenic and aromatic oils obtained from petroleum refining, and liquid resins from rosin or petroleum feedstocks. Exemplary classes of oils useful as processing aids include white mineral oil (such as Kaydol™ oil (available from Witco), and Shellflex™ 371 naphthenic oil (available from Shell Oil Company). Another suitable oil is Tuflo™ oil (available from Lyondell). These optional materials also include compatibilizers, and printability-enhancing polymers, such as copolymers of ethylene and acrylic acid ("EAA"). Also included as a potential component of the polymer compositions used in the present invention are various organic and inorganic fillers, the identity of which depends upon the type of application in which the blend is to be utilized. Representative examples of such fillers include organic and inorganic fibers such as those made from asbestos, boron, graphite, ceramic, glass, metals (such as stainless steel) or polymers (such as aramid fibers), talc, carbon black, carbon fibers, calcium carbonate, alumina trihydrate, glass fibers, marble dust, cement dust, clay, feldspar, silica or glass, fumed silica, alumina, magnesium oxide, magnesium hydroxide, antimony oxide, zinc oxide, barium sulfate, aluminum silicate, calcium silicate, titanium dioxide, titanates, aluminum nitride, $B_2O_3$, nickel powder or chalk.

Other representative organic or inorganic, fiber or mineral, fillers include carbonates such as barium, calcium or magnesium carbonate; fluorides such as calcium or sodium aluminum fluoride; hydroxides such as aluminum hydroxide; metals such as aluminum, bronze, lead or zinc; oxides such as aluminum, antimony, magnesium or zinc oxide, or silicon or titanium dioxide; silicates such as asbestos, mica, clay (kaolin or calcined kaolin), calcium silicate, feldspar, glass (ground or flaked glass or hollow glass spheres or microspheres or beads, whiskers or filaments), nepheline, perlite, pyrophyllite, talc or wollastonite; sulfates such as barium or calcium sulfate; metal sulfides cellulose, in forms such as weed or shell flour; calcium terephthalate; and liquid crystals. Mixtures of more than one such filler may be used as well.

These additives are employed in functionally equivalent amounts known to those skilled in the art. For example, the amount of antioxidant employed is that amount which prevents the polymer or polymer blend from undergoing oxidation at the temperatures and environment employed during storage and ultimate use of the polymers. Such amount of antioxidants is usually in the range of from 0.01 to 10, preferably from 0.05 to 5, more preferably from 0.1 to 2 percent by weight based upon the weight of the polymer or polymer blend. Similarly, the amounts of any of the other enumerated additives are the functionally equivalent amounts such as the amount to render the polymer or polymer blend antiblocking, to produce the desired result, to provide the desired color from the colorant or pigment. Such additives can

suitably be employed in the range of from 0.05 to 50, preferably from 0.1 to 35, more preferably from 0.2 to 20 percent by weight based upon the weight of the polymer or polymer blend. When a processing aid is employed, it will be present in the composition of the invention in an amount of at least 5 percent. The processing aid will typically be present in an amount of no more than 60, preferably no more than 30, and most preferably no more than 20 weight percent.

2) The Pressure Sensitive Adhesive Component of the Pressure Sensitive Products of the Present Invention

Pressure sensitive adhesives are composed of a rubbery type elastomer combined with a liquid or solid resin tackifier component. A mixture of resins may be used to provide a balance of properties which can not be obtained from a single resin. Typical ingredients used in pressure sensitive adhesives are:

a) Elastomers including but not limited to: reclaimed rubber, SBR (styrene butadiene rubber), polyisobutylene or butyl rubber, Buna-N (butadiene acrylonitrile rubber), polyvinyl ethers (ethyl or higher and polyacrylate ethers (ethyl or higher).

b) Tackifiers including but not limited to: polyterpene resins,ggum resins, rosin esters and other rosin derivatives, oil-soluble phenolic resins, coumarone-indene resins, and petroleum hydrocarbon resins.

c) Plasticizers including but not limited to: mineral oil, liquid polybutenes, liquid polyacrylates, and lanolin.

d) Fillers including but not limited to: zinc oxide, titanium dioxide, aluminum trihydrate, calcium carbonate, clay and pigments.

e) Antioxidants including but not limited to: rubber antioxidants (preferably non-staining), metal dithiocarbamates, and metal chelating agents.

Pressure sensitive adhesives are widely used in everyday applications, such as masking tape, clear office tape, labels, decals, bandages, decorative and protective sheets (such as shelf and drawer liners), floor tiles, sanitary napkin/incontinence device placement strips, sun control films, and the joining of gaskets to automobile windows.

As set forth in J. Class and S. Chu, Handbook of Pressure Sensitive Adhesive Technology, Second Edition, D. Satas, ed., 1989, pp. 158-204, the requirements for pressure sensitive adhesive behavior may be defined by temperature and rate dependent viscoelastic properties of the materials and formulations.

Broadly speaking, to be a suitable pressure sensitive adhesive, the formulations must have a glass transition temperature of from -20 to 25°C, preferably from -10 to 10°C, as reflected by the tan $\delta$ peak temperature at 1 radian per second, as determined by dynamic mechanical spectroscopy. Broad glass transition peaks are favored, in that when the peak is broad, the adhesive will perform over a wider temperature range, thereby increasing its utility. Further, adhesives having a broad glass transition peak typically be characterized as having increased tack and peel strength.

According to what has come to be known as the Dahlquist criteria, broadly speaking, to be a suitable pressure sensitive adhesive, the formulation must have a plateau shear modulus at 25°C at 1 radian per second which is between 1 x $10^5$ and 6 x $10^6$ dynes/cm$^2$, preferably from 1 x $10^5$ and 3 x $10^5$ dynes/cm$^2$, as determined by dynamic mechanical spectroscopy. A material stiffer than this, that is, a material which has a plateau shear modulus at 25°C of 1 x $10^7$ dynes/cm$^2$, will not exhibit surface tack at room temperature. A material less stiff than this, that is, a material which has a plateau shear modulus at 25°C of 1 x $10^4$ dynes/cm$^2$, will lack sufficient cohesive strength to be useful.

In particular, preferred pressure sensitive adhesives for use in low peel labels will have a G' of from 3 x $10^5$ to 1 x $10^6$ dynes/cm$^2$ (0.3 to 1 MPa) and a glass transition temperature of from -50 to -30°C. Preferred pressure sensitive adhesives for use in freezer labels will have a G' of from 8 x $10^4$ to 2 x $10^5$ dynes/cm$^2$ (0.08 to 0.2 MPa) and a glass transition temperature of from -45 to -30°C. Preferred pressure sensitive adhesives for use in cold temperature labels will have a G' of from 2 x $10^5$ to 1 x $10^6$ dynes/cm$^2$ (0.2 to 1 MPa) and a glass transition temperature of from -25 to -10°C. Preferred pressure sensitive adhesives for use in pressure sensitive adhesive tapes will have a G' of from 7 x $10^5$ to 5 x $10^6$ dynes/cm$^2$ (0.7 to 5 MPa) and a glass transition temperature of from -10 to 10°C. Preferred pressure sensitive adhesives for use in high peel labels will have a G' of from 2 x $10^5$ to 6 x $10^5$ dynes/cm$^2$ (0.2 to 0.6 MPa) and a glass transition temperature of from 0 to 10°C. Preferred pressure sensitive adhesives for use in disposables will have a G' of from 4 x $10^5$ to 2 x $10^6$ dynes/cm$^2$ (0.4 to 2 MPa) and a glass transition temperature of from 10 to 30°C.

3) The Release Liner Component of the Pressure Sensitive Products of the Present Invention

The release liner may be any suitable conventionally known liner material for labeling applications including, but net limited t, flexible PVC, polypropylene, oriented polypropylene, LDPE and blends therefrom, silicone coated

paper and polyethylene terephthalate (PET). Of these, silicone coated paper and polyethylene terephthalate (PET) are preferred.

Properties of the Filmstocks of the Present Invention

The present invention provides filmstock having an improved combination of optics, die-cuttability, deformability and stiffness. In one aspect, the present invention provides a label filmstock having low haze while maintaining sufficient stiffness and die-cuttability to be used in a deformable, pressure-sensitive label. This low haze allows label filmstock of the present invention to be made into labels for deformable substrates that are substantially clear. The haze of films of the present invention was measured using ASTM D 1003. The haze level of the filmstock of the present invention depends on the particular application. However, it is a feature of the present invention that when compared to known pressure sensitive filmstock, the filmstock of the present invention can be produced that exhibits lower haze while maintaining substantially similar stiffness and die-cuttability. This lower haze allows filmstock of the present invention to be made into substantially clear labels, tapes and other PSP's for deformable substrates. To prepare substantially clear labels from label filmstock, the label filmstock should exhibit a haze value of less than 60 percent, preferably, 50 percent or less, even more preferably, 40 percent or less.

It should be noted that the stiffness of filmstock in general can be increased by increasing the thickness of the filmstock. However, pressure sensitive filmstock of the present invention is generally no more than 5 mils thick, and preferably no more than 4 mils thick. The filmstock of the present invention is generally at least 1 mil thick, and preferably at least 2 mils thick.

Stiffness of the filmstock of the present invention was determined by measuring the machine direction 1 percent secant modulus using ASTM D 882. Generally, filmstock of the present invention should have a machine direction 1 percent secant modulus of less than 210,000. Preferably, filmstock of the present invention will have a machine direction 1 percent secant modulus of 5,000 to 200,000, preferably of 30,000 to 150,000, more preferably from 30,000 to 100,000.

A measure of the deformability of the filmstock needed for adequate processability is measured by its ultimate elongation. Determining whether filmstock exhibits sufficient die-cuttability is somewhat subjective in nature. Generally, this determination is made by incorporating the filmstock into a filmstock/adhesive/release liner composite structure by methods well known in the art and diecutting the composite structure on a rotary die at commercial manufacturing speeds to see if there are web breaks or damage to the release liner. For tapes, similar end-use test are applied. However, a lower ultimate elongation of the filmstock is believed to be an indication of enhanced die-cuttability of a pressure sensitive filmstock/adhesive composite structure.

Machine direction ultimate elongation for filmstock of the present invention was measured by ASTM D 882. Generally, the filmstock of the present invention will exhibit an ultimate elongation of greater than or equal to 20 percent but less than or equal to 350 percent, preferably greater than or equal to 50 percent but less than or equal to 250 mercent , more preferably greater than or equal to 50 percent but less than or equal to 150 percent.

In order to exhibit the aforementioned combination of properties, accordingly, the substantially random interpolymer or blend compositions therefrom should comprise from 25 to 100, preferably from 35 to 100, more preferably from 50 to 100 percent by weight (based on the combined weight of the substantially random interpolymer and the glassy polymer ) of the substantially random interpolymer. Said glassy polymer component generally comprises from 0 to 75, preferably from 0 to 65, more preferably from 0 to 50 percent by weight based on the combined weight of the substantially random interpolymer and the glassy polymer.

The substantially random interpolymer should contain from 21 to 65, preferably from 25 to 50, more preferably from 30 to 45 mole percent of polymer units derived from at least one vinyl or vinylidene aromatic monomer hindered aliphatic or cycloaliphatic vinyl or vinylidene monomer and from 35 to 79, preferably from 50 to 75, more preferably from 55 to 70 mole percent of polymer units derived from ethylene at least one aliphatic $\alpha$-olefin having from 3 to 20 carbon atoms.

The number average molecular weight (Mn) of the substantially random interpolymer is usually greater than 5,000, preferably from 20,000 to 1,000,000, more preferably from 50,000 to 500,000.

The molecular weight distribution ($M_w/M_n$) of the substantially random interpolymer is from 1.5 to 20, preferably of from 1.8 to 10, more preferably of from 2 to 5.

The substantially random interpolymer should have a melt index ($I_2$) of from 0.2 to 10, preferably from 0.5 to 5, more preferably from 0.5 to 3.0 g/10 min.

The following examples are illustrative of the invention, but are not to be construed as to limiting the scope of the invention in any manner.

EXAMPLES

Test Methods

a) Melt Flow Measurements

The molecular weight of the polymer compositions for use in the present invention was conveniently indicated using a melt index measurement according to ASTM D-1238, Condition 190°C/2.16 kg (formally known as "Condition (E)" and also known as $I_2$) was determined. Melt index was inversely proportional to the molecular weight of the polymer. Thus, the higher the molecular weight, the lower the melt index, although the relationship was not linear.

b) Styrene Analyses

Interpolymer styrene content and atactic polystyrene concentration were determined using proton nuclear magnetic resonance ($^1H$ N.M.R). All proton NMR samples were prepared in 1, 1, 2, 2--tetrachloroethane-$d_2$ (TCE-$d_2$). The resulting solutions were 1.6 - 3.2 percent polymer by weight. Melt index ($I_2$) was used as a guide for determining sample concentration. Thus when the $I_2$ was greater than 2 g/10 min, 40 mg of interpolymer was used; with an $I_2$ between 1.5 and 2 g/10 min, 30 mg of interpolymer was used; and when the $I_2$ was less than 1.5 g/10 min, 20 mg of interpolymer was used. The interpolymers were weighed directly into 5 mm sample tubes. A 0.75 mL aliquot of TCE-$d_2$ was added by syringe and the tube was capped with a tight-fitting polyethylene cap. The samples were heated in a water bath at 85°C to soften the interpolymer. To provide mixing, the capped samples were occasionally brought to reflux using a heat gun.

Proton NMR spectra were accumulated on a Varian VXR 300 with the sample probe at 80°C, and referenced to the residual protons of TCE-$d_2$ at 5.99 ppm. The delay times were varied between 1 second, and data was collected in triplicate on each sample. The following instrumental conditions were used for analysis of the interpolymer samples:

Varian VXR-300, standard $^1H$:
Sweep Width, 5000 Hz
Acquisition Time, 3.002 sec
Pulse Width, 8 μsec
Frequency, 300 MHz
Delay, 1 sec
Transients, 16

The total analysis time per sample was 10 minutes.

Initially, a $^1H$ NMR spectrum for a sample of polystyrene, Styron™ 680 (available form the Dow Chemical Company, Midland, MI) was acquired with a delay time of one second. The protons were "labeled": b, branch; a, alpha; o, ortho; m, meta; p, para, as shown in Figure 1.

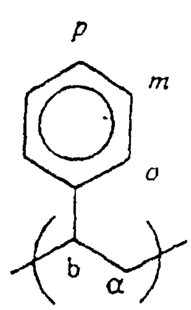

Figure 1.

Integrals were measured around the protons labeled in Figure 1; the 'A' designates aPS. Integral $A_{7.1}$ (aromatic, around 7.1 ppm) wasbelieved to be the three ortho/para protons; and integral $A_{6.6}$ (aromatic, around 6.6 ppm) the two meta protons. The two aliphatic protons labeled α resonate at 1.5 ppm; and the single proton labeled b was at 1.9 ppm. The aliphatic region was integrated from 0.8 to 2.5 ppm and is referred to as $A_{al}$. The theoretical ratio for $A_{7.1}$: $A_{6.6}$: $A_{al}$ is 3: 2: 3, or 1.5: 1: 1.5, and correlated very well with the observed ratios for the Styron™ 680 sample

for several delay times of 1 second. The ratio calculations used to check the integration and verify peak assignments were performed by dividing the appropriate integral by the integral $A_{6.6}$ Ratio $A_r$ is $A_{7.1}$ / $A_{6.6}$.

Region $A_{6.6}$ was assigned the value of 1. Ratio Al is integral $A_{al}$ / $A_{6.6}$. All spectra collected have the expected 1.5: 1: 1.5 integration ratio of *(o+p): m:* ($\alpha$+*b*). The ratio of aromatic to aliphatic protons was 5 to 3. An aliphatic ratio of 2 to 1 was predicted based on the protons labeled $\alpha$ and b respectively in Figure 1. This ratio was also observed when the two aliphatic peaks were integrated separately.

For the ethylene/styrene interpolymers, the H NMR spectra using a delay time of one second, had integrals $C_{7.1}$, $C_{6.6}$, and $C_{al}$ defined, such that the integration of the peak at 7.1 ppm included all the aromatic protons of the copolymer as well as the *o* & *p* protons of aPS. Likewise, integration of the aliphatic region C, in the spectrum of the interpolymers included aliphatic protons from both the aPS and the interpolymer with no clear baseline resolved signal from either polymer. The integral of the peak at 6.6 ppm $C_{5.6}$ wasresolved from the other aromatic signals and it was believed to be due solely to the aPS homopolymer (probably the *meta* protons). (The peak assignment for atactic polystyrene at 6.6 ppm (integral $A_{5.6}$) was made based upon comparison to the authentic sample of Styron™ 680.) This was a reasonable assumption since, at very low levels of atactic polystyrene, only a very weak signal was observed here. Therefore, the phenyl protons of the copolymer must not contribute to this signal. With this assumption, integral $A_{6.6}$ becomes the basis for quantitatively determining the aPS content.

The following equations were then used to determine the degree of styrene incorporation in the ethylene/ styrene interpolymer samples:

$$(C\ Phenyl) = C_{7.1}: + A_{7.1} - (\ 1.5 \times A_{6.6})$$
$$(C\ Aliphatic) = C_{6.1} - (\ 1\ 5 \times A_{6.6})$$
$$s_c = (C\ Phenyl)\ /5$$
$$e_c = (C\ Aliphatic - (3 \times s_c))\ /4$$
$$E = e_c / (e_c + s_c)$$
$$S_c = s_c / (e_c + s_c)$$

and the following equations were used to calculate the mol percent ethylene and styrene in the interpolymers.

$$Wt\%E = \frac{E * 28}{(E * 28) + (Sc * 104)}(100)$$

and

$$Wt\%S = \frac{Sc * 104}{(E * 28) + (Sc * 104)}(100)$$

where: $s_c$ and $e_c$ were styrene and ethylene proton fractions in the interpolymer, respectively, and $S_c$ and E were mole fractions of styrene monomer and ethylene monomer in the interpolymer, respectively.

The weight percent of aPS in the interpolymers was then determined by the following equation:

$$Wt\%aPS = \frac{(Wt\%S) * \left(\frac{A_{6.6}/2}{Sc}\right)}{100 + \left[(Wt\%S) * \left(\frac{A_{6.6}/2}{Sc}\right)\right]} * 100$$

The total styrene content was also determined by quantitative Fourier Transform Infrared spectroscopy (FTIR).

<u>c) Modulus Determination</u>

1 percent secant modulus was measured in the machine direction using ASTM D 882.

d) Elongation Determination

Elongation was measured in the machine direction using ASTM D 882

e) Haze

Haze was measured using ASTM D 1003.

Preparation of ESI #'s 1 - 3

ESI #'s 1 - 3 were substantially random ethylene/styrens interpolymers prepared using the following catalyst and polymerization procedures.

Preparation of Catalyst A; (1H-cyclopenta[l]phenanthrene-2-yl)dimethyl(t-butylamido)-silanetitanium 1,4-diphenylbutadiene

1) Preparation of lithium 1H-cyclopenta[l]phenanthrene-2-yl

To a 250 ml round bottom flask containing 1.42 g (0.00657 mole) of 1H-cyclopenta[l]phenanthrene and 120 ml of benzene was added dropwise, 4.2 ml of a 1.60 M solution of n-BuLi in mixed hexanes. The solution was allowed to stir overnight. The lithium salt was isolated by filtration, washing twice with 25 ml benzene and drying under vacuum. Isolated yield was 1.426 g (97.7 percent). 1H NMR analysis indicated the predominant isomer was substituted at the 2 position.

2) Preparation of (1H-cyclopenta[l]phenanthrene-2-yl)dimethylchlorosilane

To a 500 ml round bottom flask containing 4.16 g (0.0322 mole) of dimethyldichlorosilane ($Me_2SiCl_2$ ) and 250 ml of tetrahydrofuran (THF) was added dropwise a solution of 1.45 g (0.0064 mole) of lithium 1H-cyclopenta[l] phenanthrene-2-yl in THF. The solution was stirred for approximately 16 hours, after which the solvent was removed under reduced pressure, leaving an oily solid which was extracted with toluene, filtered through diatomaceous earth filter aid (Celite™), washed twice with toluene and dried under reduced pressure. Isolated yield was 1.98 g (99.5 percent).

3. Preparation of (1H-cyclopenta[l]phenanthrene-2-yl)dimethyl(t-butylamino)silane

To a 500 ml round bottom flask containing 1.98 g (0.0064 mole) of (1H-cyclopenta[l]phenanthrene-2-yl)dimethylchlorosilane and 250 ml of hexane was added 2.00 ml (0.0160 mole) of t-butylamine. The reaction mixture was allowed to stir for several days, then filtered using diatomaceous earth filter aid (Celite™), washed twice with hexane. The product was isolated by removing residual solvent under reduced pressure. The isolated yield was 1.98 g (89.9 percent).

4. Preparation of dilithic (1H-cyclopenta[l]phenanthrene-2-yl)dimethyl(t-butylamido)silane

To a 250 ml round bottom flask containing 1.03 g (0.0030 mole) of (1H-cyclopenta[l]phenanthrene-2-yl)dimethyl(t-butylamino)silane) and 120 ml of benzene was added dropwise 3.90 ml of a solution of 1.6 M n-BuLi in mixed hexanes. The reaction mixture was stirred for approximately 16 hours. The product was isolated by filtration, washed twice with benzene and dried under reduced pressure. Isolated yield was 1.08 g (100 percent).

5. Preparation of (1H-cyclopenta[l]phenanthrene-2-yl)dimethyl(t-butylamido)silanetitanium dichloride

To a 250 ml round bottom flask containing 1.17 g (0.0030 mole) of $TiCl_3$•3THF and 120 ml of THF was added at a fast drip race 50 ml of a THF solution of 1.08 g of dilithio (1H-cyclopenta[l]phenanthrene-2-yl)dimethyl(t-butylamido) silane. The mixture was stirred at 20 °C for 1.5 h at which time 0.55 gm (0.002 mole) of solid $PbCl_2$ was added. After stirring for an additional 1.5 h the THF was removed under vacuum and the reside was extracted with toluene, filtered and dried under reduced pressure to give an orange solid. Yield was 1.31 g (93.5 percent).

6. Preparation of (1H-cyclopenta[l]phenanthrene-2-yl)dimethyl(t-butylamido)silanetitanium 1,4-diphenylbutadiene

To a slurry of (1H-cyclopenta[l]phenanthrene-2-yl)dimethyl(t-butylamido)silanetitanium dichloride (3.48 g, 0.0075 mole) and 1.551 gm (0.0075 mole) of 1,4-diphenyllbutadiene in 80 ml of toluene at 70 °C was add 9.9 ml of a 1.6 M solution of n-BuLi (0.0150 mole). The solution immediately darkened. The temperature was increased to bring the mixture to reflux and the mixture was maintained at that temperature for 2 hrs. The mixture was cooled to -20 °C and the volatiles were removed under reduced pressure. The residue was slurried in 60 ml of mixed hexanes at 20 °C for approximately 16 hours. The mixture was cooled to -25 °C for 1 h. The solids were collected on a glass frit by vacuum filtration and dried under reduced pressure. The dried solid was placed in a glass fiber thimble and solid extracted continuously with hexanes using a soxhlet extractor. After 6 h a crystalline solid was observed in the boiling pot. The mixture was cooled to -20 °C, isolated by filtration from the cold fixture and dried under reduced pressure to give 1.62 g of a dark crystalline solid. The filtrate was discarded. The solids in the extractor were stirred and the extraction continued with an additional quantity of mixed hexanes to give an additional 0.46 gm of the desired product as a dark crystalline solid.

Polymerization

ESI #'s 1 -3 were prepared in a 6 gallon (22.7 L), oil jacketed, Autoclave continuously stirred tank reactor (CSTR). A magnetically coupled agitator with Lighthing A-320 impellers provided the mixing. The reactor ran liquid full at 475 psig (3,275 kPa'. Process flow was in at the bottom and out of the top. A heat transfer oil was circulated through the jacket of the reactor to remove some of the heat of reaction. At the exit of the reactor was a micromotion flow meter that measured flow and solution density. All lines on the exit of the reactor were traced with 50 psi (344.7 kPa) steam and insulated.

Toluene solvent was supplied to the reactor at 30 psig (207 kPa). The feed to the reactor was measured by a Micro-Motion mass flow meter. A variable speed diaphragm pump controlled the feed rate. At the discharge of the solvent pump, a side stream was taken to provide flush flows for the catalyst injection line (1 lb/hr (0.45 kg/hr)) and the reactor agitator (0.75 lb/hr ( 0.34 kg/ hr)). These flows were measured by differential pressure flow meters and controlled by manual adjustment of micro-flow needle valves. Uninhibited styrene monomer was supplied to the reactor at 30 psig (207 kpa). The feed to the reactor was measured by a Micro-Motion mass flow meter. A variable speed diaphragm pump controlled the feed rate. The styrene stream was mixed with the remaining solvent stream. Ethylene was supplied to the reactor at 600 psig (4,137 kPa). The ethylene stream was measured by a Micro-Motion mass flow meter just prior to the Research valve controlling flow. A Brooks flow meter/controller was used to deliver hydrogen into the ethylene stream at the outlet of the ethylene control valve. The ethylene/hydrogen mixture combines with the solvent/styrene stream at ambient temperature. The temperature of the solvent/monomer as it enters the reactor was dropped to -5 °C by an exchanger with -5°C glycol on the jacket. This scream entered the bottom of the reactor. The three component catalyst system and its solvent flush also entered the reactor at the bottom but through a different port than the monomer stream. Preparation of the catalyst components took place in an inert atmosphere glove box. The diluted components were put in nitrogen padded cylinders and charged to the catalyse run tanks in the process area. From these run tanks the catalyst was pressured up with piston pumps and the flow was measured with Micro-Motion mass flow meters. These streams combine with each other and the catalyst flush solvent just prior to entry through a single injection line into the reactor.

Polymerization was stepped with the addition of catalyst kill (water mixed with solvent) into the reactor product line after the micromotion flow meter measuring the solution density. Other polymer additives can be added with the catalyst kill. A static mixer in the line provided dispersion of the catalyst kill and additives in the reactor effluent stream. This stream next entered post reactor heaters that provide additional energy for the solvent removal flash. This flash occurred as the effluent exited the post reactor heater and the pressure was dropped from 475 psig (3,275 kPa) down to -250mm of pressure absolute at the reactor pressure control valve. This flashed polymer entered a hot oil jacketed devolatilizer. Approximately 85 percent of the volatiles were removed from the polymer in the devolatilizer. The volatiles exited the top of the devolatilizer. The stream was condensed with a glycol jacketed exchanger and entered the suction of a vacuum pump and was discharged to a glycol jacket solvent and styrene/ethylene separation vessel. Solvent and styrene were removed from the bottom of the vessel and ethylene from the top. The ethylene stream was measured with a Micro-Motion mass flow meter and analyzed for composition. The measurement of vented ethylene plus a calculation of the dissolved gasses in the solvent/styrene stream were used to calculate the ethylene conversion. The polymer separated in the devolatilizer was pumped out with a gear pump to a ZSK-30 devolatilizing vacuum extruder. The dry polymer exits the extruder as a single strand. This strand was cooled as it was pulled through a water bath. The excess water was blown from the strand with air and the strand was chopped into pellets with a strand chopper.

The various catalysts, co-catalysts and process conditions used to prepare ESI #'s 1 - 3 are summarized in Table 1.

Table 1. Preparation Conditions for ESI #'s 1 - 3.

| ESI # | Reactor Temp °C | Solvent Flow lb/hr (kg/hr) | Ethylene Flow lb/hr (kg/hr) | Hydrogen Flow[d] sccm | Styrene Flow lb/hr (kg/hr) | Ethylene Conversn. percent | Co-Catalyst | B/Ti Ratio | MMAO[c] Ti Ratio |
|---|---|---|---|---|---|---|---|---|---|
| ESI 1 | 83.2 | 37.0 (16.8) | 1.9 (0.9) | 1.3 | 7.1 (3.2) | 97.0 | B[b] | 3.5 | 3.5 |
| ESI 2 | 81.4 | 37.0 (16.8) | 1.9 (0.9) | 10 | 7.0 (3.2) | 96.4 | B[b] | 3.5 | 3.5 |
| ESI 3 | 100.2 | 35.0 (15.9) | 4.0 (1.8) | 20 | 2.7 (1.2) | 92.5 | B[b] | 3.0 | 5.0 |

[a]The catalyst was Catalyst A(1H-cyclopenta[l]phenanthrene-2-yl)dimethyl(t-butylamido)-silanetitanium 1,4-diphenylbutadiene
[b]Co=catalyst B is tris(pentafluorophenyl)borane.

[c]a modified methylaluminoxane commercially available from Akzo Nobel as MMAO-3A.

[d]SCCM is standard $cm^3/min$

Preparation of ESI #'s 4 - 5.

ESI's 4 - 5 were substantially random ethylene/styrene interpolymers prepared using the following catalyst and polymerization procedures.

Polymerization

ESI #'s 4- 5 were prepared in a continuously operating loop reactor (36.8 gal). An Ingersoll-Dresser twin screw pump provided the mixing. The reactor ran liquid full at 475 psig (3,275 kPa) with a residence time of approximately 25 minutes. Raw materials and catalyst/cocatalyst flows were fed into the suction of the twin screw pump through injectors and Kenics static mixers. The twin screw pump discharged into a 2" diameter line which supplied two Chemineer-Kenics 10-68 Type BEM Multi-Tube heat exchangers in series. The tubes of these exchangers contained twisted tapes to increase heat transfer. Upon exiting the last exchanger, loop flow returned through the injectors and static mixers to the suction of the pump. Heat transfer oil was circulated through the exchangers' jacket to control the loop temperature probe located just prior to the first exchanger. The exit stream of the loop reactor was taken off between the two exchangers. The-flow and solution density of the exit stream was measured by a MicroMotion.

Solvent feed to the reactor was supplied by two different sources. A fresh stream of toluene from an 8480-S-E Pulsafeeder diaphragm pump with rates measured by a MicroMotion flowmeter was used to provide flush flow for the reactor seals (20 lb/hr (9.1 kg/hr). Recycle solvent was mixed with uninhibited styrene monomer on the suction side of five 8480-5-E Pulsafeeder diaphragm pumps in parallel. These five Pulsafeeder pumps supplied solvent and styrene to the reactor at 650 psig (4,583 kPa). Fresh styrene flow was measured by a MicroMotion flowmeter, and total recycle solvent/styrene flow was measured by a separate MicroMotion flowmeter. Ethylene was supplied to the reactor as 687 psig (4,838 kPa). The ethylene stream was measured by a Micro-Motion mass flowmeter. A Brooks flowmeter/controller was used to deliver hydrogen into the ethylene stream at the outlet of the ethylene control valve. The ethylene/hydrogen mixture combined wich the solvent/styrene stream at ambient temperature. The temperature of the entire feed stream as it entered the reactor loop was lowered to 2°C by an exchanger with -10°C glycol on the jacket. Preparation of the three catalyst components took place in three separate tanks: fresh solvent and concentrated catalyst/cocatalyst premix were added and mixed into their respective run tanks and fed into the reactor via variable speed 680-S-AEN7 Pulsafeeder diaphragm pumps. As previously explained, the three component catalyst system entered the reactor loop through an injector and static mixer into the suction side of the twin screw pump. The raw material feed stream was also fed into the reactor loop through an injector and static mixer downstream of the catalyst injection point but upstream of the twin screw pump suction.

Polymerization was stopped with the addition of catalyst kill (water mixed with solvent) into the reactor product line after the Micro Motion flowmeter measuring the solution density. A static mixer in the line provided dispersion of the catalyst kill and additives in the reactor effluent stream. This stream next entered post reactor heaters that provided additional energy for the solvent removal flash. This flash occurred as the effluent exited the post reactor heater and the pressure was dropped from 475 psig (3,275 kPa) down to 450 mmHg (60 kPa) of absolute pressure at the reactor

pressure control valve. This flashed polymer entered the first of two hot oil jacketed devolatilizers. The volatiles flashing from the first devolatizer were condensed with a glycol jacketed exchanger, passed through the suction of a vacuum pump, and were discharged to the solvent and styrene/ethylene separation vessel. Solvent and styrene were removed from the bottom of this vessel as recycle solvent while ethylene exhausted from the top. The ethylene stream was measured with a MicroMotion mass flowmeter. The measurement of vented ethylene plus a calculation of the dissolved gases in the solvent/styrene stream were used to calculate the ethylene conversion. The polymer and remaining solvent separated in the devolatilizer was pumped with a gear pump to a second devolatizer. The pressure in the second devolatizer was operated at 5 mmHg (0.7 kPa) absolute pressure to flash the remaining solvent. This solvent was condensed in a glycol heat exchanger, pumped through another vacuum pump, and exported to a waste tank for disposal. The dry polymer (< 1000 ppm total volatiles) was pumped with a gear pump to an underwater pelletizer with 6-hole die, pelletized, spin-dried, and collected in 1000 lb boxes.

The various catalysts, co-catalysts and process conditions used to prepare the various individual ethylene styrene interpolymers (ESI #'s 4-5) are summarized in Table 2.

Table 2 Preparation Conditions for ESI #'s 4-5[a].

| ESI # | Reactor Temp °C | Solvent Flow lb/hr (kg/hr) | Ethylene Flow lb/hr (kg/hr) | Hydrogen Flow[d] sccm | Styrene Flow lb/hr (kg/hr) | Ethylene Convern. percent | Co-Catalyst | B/Ti Ratio | MMAO[c] /Ti Ratio |
|---|---|---|---|---|---|---|---|---|---|
| ESI 4 | 78.7 | 322.6 (146.3) | 26.0 (11.8) | 2590 | 120.1 (54.5) | 85.9 | B[b] | 3.5 | 4.4 |
| ESI 5 | 64.3 | 529.8 (240.3) | 24.7 (11.2) | 637 | 121.0 (54.9) | 86.3 | B[b] | 3.5 | 1.2 |

a Catalyst is (t-butylamido)dimethyl(tetramethylcyclopentadienyl)silane-titanium (II) 1,3-pentadiene prepared as described in U.S. Patent # 5,556,928, Example 17
b Co=catalyst B is tris(pentafluorophenyl)borane.
c a modified methylaluminoxane commercially available from Akzo Nobel as MMAO-3A.
d SCCM is standard $cm^3$/min

Example 1

A sample of ESI 1 was blown into film of 1.5 mil thickness on a 1 ¼ inch diameter Killion blown film unit under the following conditions;

Screw speed 50 rpm,
Melt temperature, 420°F
Lay flat width, 12 inches
Haul off rate 17 ft/min

The properties of the ESI sample and the film are summarized in Table 3.

Example 2

A sample of ESI 2 was blown into film of 3 mil thickness on a 2 ½ inch diameter Egan blown film unit equipped with a 6 inch Sano die under the following conditions;

Output, 120 lb/hr,
Melt temperature, 440°F
Lay flat width, 23.6 inches.

The properties of the ESI sample and the film are summarized in Table 3.

Example 3

A sample of ESI 4 was blown into film as for Example 2 but using a melt temperature of 410°F.

The properties of the ESI sample and the film are summarized in Table 3.

Example 4

A sample of ESI 4 was dry blended with Styron™ 665 (a polystyrene having the trademark of and being a product of The Dow Chemical Company, Midland, MI) to give a blend containing 75 wt percent of ESI 4 and 25 wt percent of Styron™ 655. The resulting blend was blown into film as for Example 2 but using an output of 150 lb/hr,

The properties of the ESI sample and the film were summarized in Table 3.

Example 5

A sample of ESI 4 was blended with Styron™665 as for Example 4 but to give a blend containing 50 wt percent of ESI 4 and 50 wt percent of Styron™665. The resulting blend was blown into film as for Example 2 but using an output of 156 lb/hr and a melt temperature of 430°F.

The properties of the ESI sample and the film are summarized in Table 3.

Comparative Example 1.

A sample of ESI 3 was blown into film as for Example 1. The properties of the ESI sample and the film are summarized in Table 3.

Comparative Example 2.

A sample of ESI 5 was blended with Styron™665 as for Example 4 but to give a blend containing 25 wt percent of ESI 5 and 75 wt percent of Styron™665. The resulting blend was blown into film as for Example 2 but using an output of 150 lb/hr and a melt temperature of 460°F.

The properties of the ESI sample and the film are summarized in Table 3.

Table 3. Product Data for Films of Present Invention

| Example # | ESI # | Styrene (wt percent) | Styrene (mol percent) | aPS (wt percent) | Polystyrene added (TYPE) | Polystyrene added (wt percent) | ESI $I_2$ (g/10m) | 1 percent Secant Modulus MD (PSI) | Ultimate elongation MD (percent) | Haze (percent) |
|---|---|---|---|---|---|---|---|---|---|---|
| Example 1 | 1 | 69.8 | 38.4 | 5.4 | N/A | N/A | 0.93 | 6,463 | 180 | 5 |
| Example 2 | 2 | 74.6 | 44.2 | 8.8 | N/A | N/A | 1.00 | 154,500 | 218 | 5 |
| Example 3 | 4 | 55.0 | 24.8 | 13.7 | N/A | N/A | 0.99 | 19,380 | 311 | 37 |
| Example 4 | 4 | 55.0 | 24.8 | 13.7 | Styron™665 | 25 | 0.99 | 134,000 | 149 | 37 |
| Example 5 | 4 | 55.0 | 24.8 | 13.7 | Styron™665 | 50 | 0.99 | 190,402 | 110 | 37 |
| Comp. Expt. 1 | 3 | 30.0 | 10.3 | 4.0 | N/A | N/A | 1.00 | 7,320 | 364 | 27 |
| Comp. Expt. 2 | 5 | 67.7 | 36.1 | 9.2 | Styron™665 | 75 | 1.20 | 278,000 | 4 | 9 |

Comparative Example 1 had excess elongation and therefore does not provide sufficient die cuttability. In addition the modulus was too low for easy applicability. Comparative Example 2 had insufficient elongation and the

modulus was too high for conformability with deformable substrates.

## Claims

1. A deformable pressure sensitive product (PSP) having an ultimate elongation of less than or equal to 350 and greater than or equal to 20 percent and a 1 percent secant modulus in the machine direction of from 5,000 to 200,000, comprising:

    (I) a filmstock comprising

        (A) from 25 to 100 percent by weight based on the combined weight of (A) and (B) of a substantially random interpolymer having a molecular weight distribution ($M_w/M_n$) of from 1.5 to 20, and a melt index ($I_2$) of from 0.2 to 10, and comprising

            (1) from 21 to 65 mole percent of polymer units derived from

                (a) at least one vinyl or vinylidene aromatic monomer, or
                (b) at least one hindered aliphatic or cycloaliphatic vinyl or vinylidene monomer, or
                (c) a combination of at least one vinyl or vinylidene aromatic monomer and at least one hindered aliphatic or cycloaliphatic vinyl or vinylidene monomer; and

            (2) from 35 to 79 mole percent of polymer units derived from ethylene or at least one aliphatic $\alpha$-olefin having from 3 to 20 carbon atoms or a combination thereof;

        (B) from 0 to 75 weight percent based on the combined weight of (A) and (B) of a glassy polymer;

    (II) a pressure sensitive adhesive layer; and optionally

    (III) a release liner.

2. A deformable pressure sensitive product (PSP) of Claim 1 having an ultimate elongation of less than or equal to 250 and greater than or equal to 50 percent and a 1 percent secant modulus in the machine direction of from 30,000 to 150,000, comprising:

    (I) a filmstock comprising

        (A) from 35 to 100 percent by weight based on the combined weight of (A) and (B) of a substantially random interpolymer having a molecular weight distribution ($M_w/M_n$) of from 1.8 to 10, and a melt index ($I_2$) of from 0.5 to 5, and comprising

            (1) from 25 to 50 mole percent of polymer units derived from

                a) said vinyl or vinylidene aromatic monomer represented by the following formula;

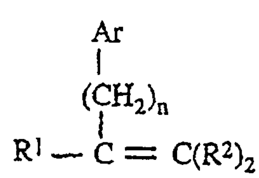

                wherein $R^1$ is selected from the group of radicals consisting of hydrogen and alkyl radicals containing from 1 to 4 carbon atoms; each $R^2$ is independently selected from the group of radicals consisting of hydrogen and alkyl radicals containing from 1 to 4 carbon atoms; Ar is a phenyl group or a phenyl group substituted with from 1 to 5 substituents selected from the group consisting of halo, $C_{1-4}$-alkyl, and $C_{1-4}$-haloalkyl; and n has a value from zero to 4;

b) said hindered aliphatic or cycloaliphatic vinyl or vinylidene monomer represented by the following general formula;

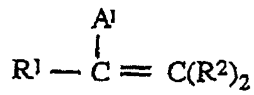

wherein $A^1$ is a sterically bulky, aliphatic or cycloaliphatic substituent of up to 20 carbons, $R^1$ is selected from the group of radicals consisting of hydrogen and alkyl radicals containing from 1 to 4 carbon atoms; each $R^2$ is independently selected from the group of radicals consisting of hydrogen and alkyl radicals containing from 1 to 4 carbon atoms; or alternatively $R^1$ aad $A^1$ together form a ring system; and

(2) from 50 to 75 mole percent of polymer units derived from ethylene or at least one of said aliphatic $\alpha$-olefins which comprises at least one of propylene, 4-methyl-1-pentene, butene-1, hexene-1 or octene-1, or a combination thereof; and

(B) from 0 to 65 weight percent based on the combined weight of (A) and (B) of said glassy polymer comprising; polystyrene, PMMA, and SAN.

**3.** A deformable pressure sensitive product (PSP) of Claim 1 having an ultimate elongation of less than or equal to 150 and greater than or equal to 50 percent and a 1 percent secant modulus in the machine direction of from 30,000 to 100,000, comprising:

(I) a filmstock comprising

(A) from 50 to 100 percent by weight based on the combined weight of (A) and (B) of a substantially random interpolymer having a molecular weight distribution ($M_w/M_n$) of from 2 to 5, and a melt index ($I_2$) of from 0.5 to 3.0, and comprising

(1) from 30 to 45 mole percent of polymer units derived from

a) said vinyl or vinylidene aromatic monomer which comprises styrene, $\alpha$-methyl styrene, ortho-, meta-, and para-methylstyrene, and the ring halogenated styrenes, or

b) said hindered aliphatic or cycloaliphatic vinyl or vinylidene monomers which comprises 5-ethylidene-2-norbornene or 1-vinylcyclo-hexene, 3-vinylcyclo-hexene, and 4-vinylcyclohexene;

(2) from 55 to 70 mol percent of polymer units derived from ethylene or said $\alpha$-olefin which comprises at least one of propylene, 4-methyl-1-pentene, butene-1, hexene-1 or octene-1; or a combination thereof; and

(B) from 0 to 50 weight percent based on the combined weight of (A) and (B) of polystyrene.

**4.** The deformable pressure sensitive product (PSP) of Claim 3
wherein Component A1 is styrene, and Component A2 is ethylene.

**5.** The deformable pressure sensitive product (PSP) of Claim 3
wherein Component A1 is styrene; and Component A2 is ethylene and at least one of propylene, 4-methyl-1-pentene, butene-1, hexene-1 or octene-1.

**6.** The deformable pressure sensitive product (PSP) of Claim 1
wherein said filmstock is a multilayer film.

**7.** The deformable pressure sensitive product (PSP) of Claim 6
wherein the multilayer film comprises a printed film.

**8.** The deformable pressure sensitive product (PSP) of Claim 7
wherein the printed film wherein the printing is on the layer comprising said substantially random interpolymer.

**Patentansprüche**

1. Verformbares selbstklebendes Produkt (PSP) mit einer Dehnungsgrenze von weniger als oder gleich 350 und größer oder gleich 20 % und einem 1 %- Sekantenmodul in Maschinenrichtung von 5000 bis 200.000, umfassend:

    (I) ein Foliengrundmaterial, umfassend

        (A) von 25 bis 100 % bezüglich des Gewichts basierend auf dem kombinierten Gewicht von (A) und (B) eines im Wesentlichen statistischen Interpolymers mit einer Molekulargewichtsverteilung ($M_w/M_n$) von 1,5 bis 20 und einem Schmelzindex ($I_2$) von 0,2 bis 10, und umfassend

            (1) von 21 bis 65 Mol-% Polymereinheiten, die stammen von

                (a) mindestens einem Vinyl- oder Vinyliden-aromatischen Monomer, oder
                (b) mindestens einem gehinderten aliphatischen oder cycloaliphatischen Vinyl- oder Vinylidenmonomer oder
                (c) einer Kombination von mindestens einem Vinyloder Vinyliden-aromatischen Monomer und mindestens einem gehinderten aliphatischen oder cycloaliphatischen Vinyl- oder Vinyliden-aromatischen Monomer; und

            (2) von 35 bis 79 Mol-% Polymereinheiten, die von Ethylen oder mindestens einem aliphatischen $\alpha$-Olefin mit von 3 bis 20 Kohlenstoffatomen oder einer Kombination davon stammen;

        (B) von 0 bis 75 Gew.-% basierend auf dem vereinigten Gewicht von (A) und (B) eines glasartigen Polymers;

    (II) eine Selbstkleberschicht; und gegebenfalls
    (III) eine Ablöseschicht.

2. Verformbares selbstklebendes Produkt (PSP) nach Anspruch 1 mit einer Dehnungsgrenze von weniger oder gleich 250 und höher als oder gleich 50 % und einem 1 %-Sekantenmodul in Maschinenrichtung von 30.000 bis 150.000, umfassend

    (I) ein Foliengrundmaterial, umfassend

        (A) von 35 bis 100 % bezüglich des Gewichts, basierend auf dem kombinierten Gewicht von (A) und (B) eines im Wesentlichen statistischen Interpolymers mit einer Molekulargewichtsverteilung ($M_w/M_n$) von 1,8 bis 10 und einem Schmelzindex ($I_2$) von 0,5 bis 5, und umfassend

            (1) von 25 bis 50 Mol-% Polymereinheiten, die stammen von

                a) dem Vinyl- oder Vinyliden-aromatischen Monomer, das durch die folgende Formel dargestellt wird

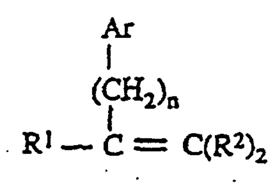

                worin $R^1$ ausgewählt ist aus der Gruppe, bestehend aus Resten, bestehend aus Wasserstoff und Alkyl-Resten, die von 1 bis 4 Kohlenstoffatome enthalten; jedes $R^2$ unabhängig ausgewählt ist aus der Gruppe von Resten, bestehend aus Wasserstoff und Alkyl-Resten, die von 1 bis 4 Kohlenstoffatome enthalten; Ar eine Phenylgruppe oder eine Phenylgruppe, die substituiert ist mit von 1 bis 5 Substituenten, ausgewählt aus der Gruppe, bestehend aus Halogen, $C_{1-4}$-Alkyl und $C_{1-4}$-Haloalkyl, ist; und worin n einen Wert von 0 bis 4 aufweist;

b) dem gehinderten aliphatischen oder cycloaliphatischen Vinyl- oder Vinyliden-aromatischen Monomer, das durch die folgende allgemeine Formel dargestellt wird

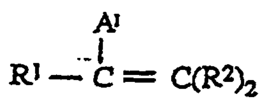

worin $A^1$ ein sterisch anspruchsvoller, aliphatischer oder cycloaliphatischer Substituent mit bis zu 20 Kohlenstoffen ist, $R^1$ ausgewählt ist aus der Gruppe von Resten, bestehend aus Wasserstoff und Alkyl-Resten, die von 1 bis 4 Kohlenstoffatome enthalten; jedes $R^2$ unabhängig ausgewählt ist aus der Gruppe von Resten, bestehend aus Wasserstoff und Alkyl-Resten, die von 1 bis 4 Kohlenstoffatome enthalten; oder worin alternativ $R^1$ und $A^1$ zusammen ein Ringsystem bilden;
(2) von 50 bis 75 Mol-% Polymereinheiten, die von Ethylen oder mindestens einem der aliphatischen $\alpha$-Olefine stammen, umfassend mindestens eines aus Propylen, 4-Methyl-1-penten, 1-Buten, 1-Hexen oder 1-Octen oder eine Kombination davon; und

(B) von 0 bis 65 Gew.-% basierend auf dem kombinierten Gewicht von (A) und (B) des glasartigen Polymers, umfassend Polystyrol, PMMA und SAN.

**3.** Verformbares Selbstkleberprodukt (PSP) nach Anspruch 1 mit einer Dehnungsgrenze von weniger als oder gleich 150 und mehr als oder gleich 50 % und einem 1 %-Sekantenmodul in Maschinenrichtung von 30.000 bis 100.000, umfassend:

(I) ein Foliengrundmaterial, umfassend

(A) von 50 bis 100 Gew.-% basierend auf dem kombinierten Gewicht von (A) und (B) eines im Wesentlichen statistischen Interpolymers mit einer Molekulargewichtsverteilung ($M_w/M_n$) von 2 bis 5 und einem Schmelzindex ($I_2$) von 0,5 bis 3,0, und umfassend

(1) von 30 bis 45 Mol-% Polymereinheiten, die stammen von

a) dem Vinyl- oder Vinyliden-aromatischen Monomer, umfassend Styrol, $\alpha$-Methylstyrol, ortho-, meta- und para-Methylstyrol und die ringhalogenierten Styrole oder
b) den gehinderten aliphatischen oder cycloaliphatischen Vinyl- oder Vinyliden-aromatischen Monomeren, umfassend 5-Ethyliden-2-norbomen oder 1-Vinylcyclohexen, 3-Vinylcyclohexen und 4-Vinylcyclohexen;

(2) von 55 bis 70 Mol-% Polymereinheiten, die von Ethylen oder dem $\alpha$-Olefin stammen, umfassend mindestens eines aus Propylen, 4-Methyl-1-penten, 1-Buten, 1-Hexen oder 1-Octen; oder eine Kombination davon; und

(B) von 0 bis 50 Gew.-% basierend auf dem kombinierten Gewicht von (A) und (B) Polystyrol.

**4.** Verformbares Selbstkleberprodukt (PSP) nach Anspruch 3, worin Komponente A1 Styrol ist und Komponente A2 Ethylen ist.

**5.** Verformbares Selbstkleberprodukt (PSP) nach Anspruch 3, worin Komponente A1 Styrol ist und Komponente A2 Ethylen und mindestens eines von Propylen, 4-Methyl-1-penten, 1-Buten, 1-Hexen oder 1-Octen ist.

**6.** Verformbares Selbstkleberprodukt (PSP) nach Anspruch 1, worin das Foliengrundmaterial eine Mehrschichtfolie ist.

**7.** Verformbares Selbstkleberprodukt (PSP) nach Anspruch 6, worin die Mehrschichtfolie eine bedruckte Folie umfasst.

**8.** Verformbares Selbstkleberprodukt (PSP) nach Anspruch 7, worin die Mehrschichtfolie eine bedruckte Folie ist, worin eine Schicht bedruckt ist, umfassend das im Wesentlichen statistische Interpolymer.

## Revendications

**1.** Produit auto-adhésif déformable (PAAD), présentant un allongement à la rupture inférieur ou égal à 350 %, mais supérieur ou égal à 20 %, et un module sécant à 1 % dans le sens machine de 5 000 à 200 000, et comportant :

I) un film de base, composé

A) de 25 à 100 % en poids, par rapport au poids total des composants (A) et (B), d'un interpolymère pratiquement statistique, dont l'indice de distribution des masses moléculaires $M_w/M_n$ vaut de 1,5 à 20 et dont l'indice de fluidité à chaud $I_2$ vaut de 0,2 à 10, et qui est constitué

1) de 21 à 65 % en moles de motifs de polymère dérivés

a) d'au moins un monomère aromatique vinylique ou vinylidénique,
b) ou d'au moins un monomère encombré, aliphatique ou cycloaliphatique, vinylique ou vinylidénique,
c) ou d'une combinaison d'au moins un monomère aromatique vinylique ou vinylidénique et d'au moins un monomère encombré, aliphatique ou cycloaliphatique, vinylique ou vinylidénique,

2) et de 35 à 79 % en moles de motifs de polymère dérivés de l'éthylène ou d'au moins une alpha-oléfine aliphatique de 3 à 20 atomes de carbone, ou d'une combinaison de tels monomères,

B) et de 0 à 75 % en poids, par rapport au poids total des composants (A) et (B), d'un polymère vitreux ;

II) une couche d'adhésif sensible à la pression ;
III) et en option, un revêtement amovible.

**2.** Produit auto-adhésif déformable (PAAD), conforme à la revendication 1, présentant un allongement à la rupture inférieur ou égal à 250 %, mais supérieur ou égal à 50 %, et un module sécant à 1 % dans le sens machine de 30 000 à 150 000, et comportant :

I) un film de base, composé

A) de 35 à 100 % en poids, par rapport au poids total des composants (A) et (B), d'un interpolymère pratiquement statistique, dont l'indice de distribution des masses moléculaires $M_w/M_n$ vaut de 1,8 à 10 et dont l'indice de fluidité à chaud $I_2$ vaut de 0,5 à 5, et qui est constitué

1) de 25 à 50 % en moles de motifs de polymère dérivés

a) dudit monomère aromatique vinylique ou vinylidénique, représenté par la formule suivante :

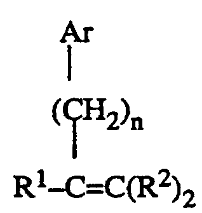

dans laquelle $R^1$ est choisi dans l'ensemble formé par l'atome d'hydrogène et les groupes alkyle comportant 1 à 4 atomes de carbone, chaque $R^2$ est choisi indépendamment dans l'ensemble formé par l'atome d'hydrogène et les groupes alkyle comportant 1 à 4 atomes de carbone, Ar représente un groupe phényle, ou bien un groupe phényle portant 1 à 5 substituants choisis parmi

les atomes d'halogène et les groupes alkyle en $C_{1-4}$ et halogénoalkyle en $C_{1-4}$, et n vaut de 0 à 4,
b) et/ou dudit monomère encombré, aliphatique ou cycloaliphatique, vinylique ou vinylidénique, représenté par la formule suivante :

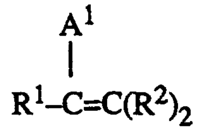

dans laquelle $A^1$ représente un substituant aliphatique
ou cycloaliphatique stériquement encombrant, comportant jusqu'à 20 atomes de carbone, $R^1$ est choisi dans l'ensemble fermé par l'atome d'hydrogène et les groupes alkyle comportant 1 à 4 atomes de carbone, chaque $R^2$ est choisi indépendamment dans l'ensemble formé par l'atome d'hydrogène et les groupes alkyle comportant 1 à 4 atomes de carbone, ou encore $R^1$ et $A^1$ représentent ensemble un système cyclique,
2) et de 50 à 75 % en moles de motifs de polymère dérivés de l'éthylène ou d'au moins l'une desdites alpha-oléfines aliphatiques qui est au moins l'un des propylène, 4-méthyl-1-pentène, 1-butène, 1-hexène et 1-octène, ou d'une combinaison de tels monomères,

B) et de 0 à 65 % en poids, par rapport au poids total des composants (A) et (B), dudit polymère vitreux qui est un polystyrène, un poly(méthacrylate de méthyle) ou PMMA, ou un copolymère styrène/acrylonitrile ou SAN.

**3.** Produit auto-adhésif déformable (PAAD), conforme à la revendication 1, présentant un allongement à la rupture inférieur ou égal à 150 %, mais supérieur ou égal à 50 %, et un module sécant à 1 % dans le sens machine de 30 000 à 100 000, et comportant :

I) un film de base, composé

A) de 50 à 100 % en poids, par rapport au poids total des composants (A) et (B), d'un interpolymère pratiquement statistique, dont l'indice de distribution des masses moléculaires $M_w/M_n$ vaut de 2 à 5 et dont l'indice de fluidité à chaud $I_2$ vaut de 0,5 à 3,0, et qui est constitué

1) de 30 à 45 % en moles de motifs de polymère dérivés

a) dudit monomère aromatique vinylique ou vinylidénique, choisi parmi les styrène, alpha-méthylstyrène, ortho-, méta- et para-méthylstyrène et styrènes halogénés sur le cycle,
b) ou dudit monomère encombré, aliphatique ou cycloaliphatique, vinylique ou vinylidénique, choisi parmi les 5-éthylidène-2-norbornène, 1-vinylcyclohexène, 3-vinylcyclohexène et 4-vinylcyclohexène,

2) et de 55 à 70 % en moles de motifs de polymère dérivés de l'éthylène ou desdites alpha-oléfines englobant au moins l'un des propylène, 4-méthyl-1-pentène, 1-butène, 1-hexène et 1-octène, ou d'une combinaison de tels monomères,

B) et de 0 à 50 % en poids, par rapport au poids total des composants (A) et (B), d'un polystyrène.

**4.** Produit auto-adhésif déformable (PAAD), conforme à la revendication 3, dans lequel le composant A1 est du styrène et le composant A2 est de l'éthylène.

**5.** Produit auto-adhésif déformable (PAAD), conforme à la revendication 3, dans lequel le composant A1 est du styrène et le composant A2 est constitué d'éthylène et d'au moins l'un des propylène, 4-méthyl-1-pentène, 1-butène, 1-hexène et 1-octène.

**6.** Produit auto-adhésif déformable (PAAD), conforme à la revendication 1, dans lequel ledit film de base est un film multicouche.

7. Produit auto-adhésif déformable (PAAD), conforme à la revendication 6, dans lequel le film multicouche comporte un film imprimé.

8. Produit auto-adhésif déformable (PAAD), conforme à la revendication 7, dans lequel l'impression dudit film imprimé se trouve sur la couche constituée dudit interpolymère pratiquement statistique.